# EUROPÄISCHE PATENTSCHRIFT

(11) **EP 0 830 262 B1**
(45) Veröffentlichungstag und Bekanntmachung des Hinweises auf die Patenterteilung: **24.03.1999**
(21) Anmeldenummer: 96914087.0
(22) Anmeldetag: 17.05.1996
(51) Int. Cl.: B60D 5/00, B62D 47/02, B61D 17/22

(54) **VORRICHTUNG ZUR ABDECKUNG DER SPURFUGE ZWISCHEN DEM DREHTELLER DES DREHGELENKS UND DEM FALTEN- ODER WELLENBALG EINES GELENKFAHRZEUGS**
FIXTURE FOR COVERING THE TRACK JOINT BETWEEN THE ROTARY PLATE OF THE SWIVEL JOINT AND THE BELLOWS OR CONCERTINA WALLS OF AN ARTICULATED VEHICLE
DISPOSITIF DE RECOUVREMENT DU JOINT DE VOIE ENTRE LE DISQUE ROTATIF D'UNE ARTICULATION TOURNANTE ET LE SOUFFLET D'INTERCIRCULATION OU UN SOUFFLET D'ONDULATION D'UN VEHICULE ARTICULE

(30) Priorität: 03.06.1995 DE 29509204 U
(43) Veröffentlichungstag der Anmeldung: 25.03.1998
(73) Patentinhaber: HÜBNER Gummi- und Kunststoff GmbH, D-34123 Kassel (DE)
(72) Erfinder: KOCH, Robert, D-37242 Bad Sooden-Allendorf (DE)
(74) Vertreter: WALTHER, WALTHER & HINZ Patentanwälte
(86) Internationale Anmeldenummer: DE9600872
(87) Internationale Veröffentlichungsnummer: WO9639311

(56) Entgegenhaltungen:
- US-A- 4 257 645
- US-A- 4 294 485
- US-A- 5 280 984

## Beschreibung

Die Erfindung betrifft eine Vorrichtung zur Abdeckung der Spurfuge zwischen dem Drehteller des Drehgelenks und dem Falten- oder Wellenbalg eines Gelekfahrzeugs, umfassend einen Rahmen zur Aufnahme eines Spurfugenabdeckbalges, gemäß den Merkmalen des Oberbegriffes von Anspruch 1. Der Spurfugenabdeckbalg verläuft unter Bildung eines tunnelartigen Hohlraumes parallel zur Mittellängsachse eines Gelenkfahrzeugs abgewinkelt zum Falten- oder Wellenbalg. Der Spurfugenabedeckbalg hat nicht nur die Aufgabe die Spurfuge zwischen Drehteller und Falten- oder Wellenbalg abzudecken. sondern bietet darüber hinaus die Möglichkeit, daß in dem durch den Spurfugenabdeckbalg gebildeten tunnelartige Hohlraum auch Versorgungsleitungen zwischen dem einen und dem anderen Wagenteil geführt werden können.

Damit die Versorgungsleitungen zugänglich sind, ist es erforderlich, daß der Spurfugenabdeckbalg abnehmbar ist. Hierzu ist nach dem Stand der Technik eine Verbindung zwischen Rahmen und Fugenabdeckbalg vorgesehen, die sich im einzelnen dadurch auszeichnet, daß der Rahmen und der Spurfugenabdeckbalg Bohrungen aufweist, wobei durch die Bohrungen Drehverschlüsse hindurchragen, wobei durch die Drehverschlüsse der Faltenbalg formschlüssig an dem Rahmen fixierbar ist. Diese Verbindung zwischen dem Spurfugenabdeckbalg und dem Rahmen ist überaus aufwendig und damit teuer in der Herstellung. Darüber hinaus treten auch fertigungstechnische Probleme auf, die daraus resultieren, daß die Bohrungen des Faltenbalges und die des Rahmens nicht immer fluchtend zueinander angeordnet sind, so daß der Drehverschluß nicht durch die entsprechenden Bohrung hindurchführbar ist.

Aus der US-PS 4,257,645 ist keine Vorrichtung zum Abdecken der Spurfuge zwischen dem Drehteller des Drehgelenks und dem Falten- oder Wellenbalg eines Gelenkfahrzeuges bekannt, sondern vielmehr eine luft- und wasserdichte Verbindung in Form einer balgartigen aufblasbaren Ringröhre. Darüber hinaus ist bei dem Balg gemäß dieser US-Patentschrift eine Konfektionierung erforderlich, die im vorliegenden Fall darin besteht, daß ein Klemmelement an dem Balg stoffschlüssig angebracht wird.

Aus der US-PS 5,280,984 nächstliegender Stand der Technik ist ein Faltenbalg zur Verbindung zweier Fahrzeugteile bekannt. Endseitig besitzt ein derartiger Faltenbalg ein Rückhalteglied, das von einer entsprechenden Ausnehmung in den beiden Wagenteilen, die durch den Faltenbalg verbunden sind, klemmend aufnehmbar ist. Nachteilig bei dieser Gestaltung eines Faltenbalges ist, daß der Faltenbalg auch hier immer speziell konfektioniert sein muß. Das heißt, daß die Halteelemente, die endseitig an dem Faltenbalg angeordnet sind, immer gesondert an den Faltenbalg angebracht werden müssen. Es ist demzufolge im eigentlichen Sinne eine Serienfertigung nicht möglich. Dies insbesondere vor dem Hintergrund, daß gegebenenfalls Faltenbälge unterschiedlicher Länge eingesetzt werden müssen.

Der Erfindung liegt daher die Aufgabe zugrunde, eine Vorrichtung zur Abdeckung der Spurfuge zwischen dem Drehteller eines Drehgelenkes und dem Falten- oder Wellenbalg eines Gelenkfahrzeuges zu schaffen, der den Einsatz von Faltenbälgen unterschiedlicher Länge erlaubt, ohne daß der Faltenbalg durch Anbringung von irgendwelchen Fixiermitteln vorab konfektioniert werden muß.

Die Aufgabe wird erfindungsgemäß dadurch gelöst, daß der Rahmen ein Aufnahmemaul zur klemmbaren Aufnahme des Endes des Spurfugenabdeckbalges aufweist, wobei am Ende des Spurfugenabdeckbalges ein Anschlußprofil angeordnet ist, daß von dem Aufnahmemaul aufnehmbar ist, wobei das Anschlußpropfil ein Klammerteil zur Aufnahme des Endes des Spurfugenabdeckbalges aufweist.

Mit einer derartigen Vorrichtung wird nun erreicht, daß der Faltenbalg als Meterware herstellbar ist, und entsprechend der gewünschten Länge abgeschnitten werden kann, um dann mit Hilfe des Klammerteiles des Anschlußprofiles erfaßt zu werden, das durch eine entsprechende Aufnahme in Form eines Aufnahmemauls aufnehmbar ist. Eine besondere Konfektionierung des Balges ist somit nicht mehr erforderlich. Hierdurch kann ein derartiger Spurfugenabdeckbalg wesentlich günstiger hergestellt werden, als dies insbesondere nach dem Stand der Technik gemäß der US-PS 5,280,984 der Fall ist. Vorteilhaft besitzt das Klammerteil zur Fixierung des Balges Zähne.

Vorteilhaft sind Klemmittel zur klemmenden Fixierung des Anschlußprofils im Aufnahmemaul vorgesehen. Die Montage bzw. Demontage der Vorrichtung wird noch dadurch erleichtert. daß das Anschlußprofil in das Aufnahmemaul einhängbar ist. Das Klemmittel ist vorzugsweise als verformbares Profil, beispielsweise aus Gummi oder Kautschuk ausgebildet und in das Aufnahmemaul unter Fixierung des Anschlußprofiles einpreßbar. Im einzelnen weist das Profil einen Kopf auf, der in das Aufnahmemaul im das Anschlußprofil fixierenden Zustand hineinragt. Um das mit dem Kopf versehene Profil besser in das Aufnahmemaul einschieben zu können, ist der Kopf des Profils pfeilspitzenförmig geformt. Zur Fixierung des Anschlußprofils und des pfeilspitzenförmig ausgebildeten Kopfes des verformbaren Profils ist das Aufnehmemaul klauenartig ausgebildet. D. h., daß das Aufnahmeprofil im Querschnitt eine U-Form aufweist, wobei die Schenkel aufeinander zu weisende Ansätze aufweisen. An diesen Ansätzen liegt der Profilkopf im eingeschobenen Zustand von innen sich abstützend an.

Anhand der Zeichnung wird die Erfindung nachstehend beispielaft näher erläutert.
- Fig. 1: zeigt schematisch die Anordnung des Fugenabdeckbalges im Bereich eines Überganges;
- Fig. 2: zeigt einen Schnitt gemäß der Linie II-II aus Fig. 1.

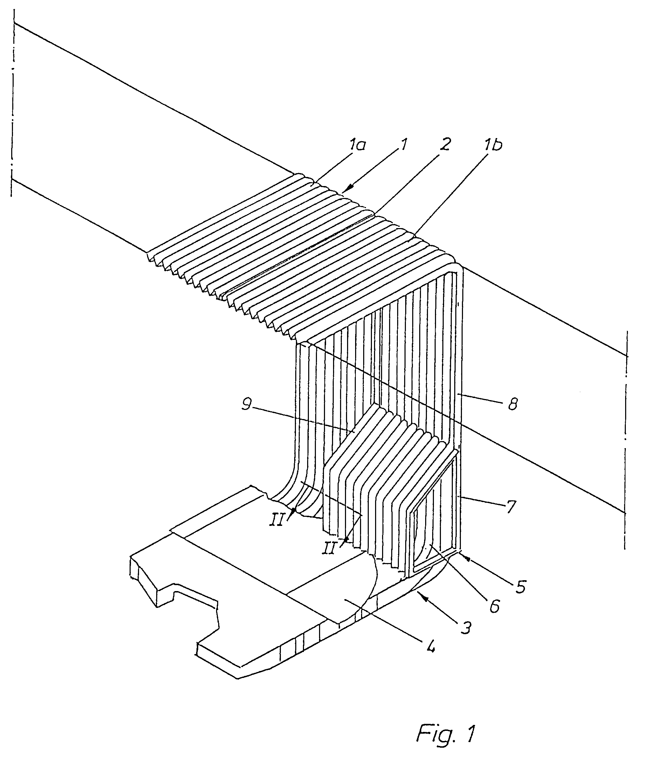

Der in Fig. 1 dargestellte mit 3 bezeichnete Übergang besitzt den Faltenbalg 1 mit den Faltenbalgelementen 1a und 1b, die durch den Mittelrahmen 2 miteinander verbunden sind. Der mit 3 bezeichnete Übergang weist darüber hinaus den Drehteller 4 des nicht im einzelnen dargestellten Drehgelenks auf, das die beiden Fahrzeugteile eines Gelenkfahrzeugs miteinander verbindet. Im Bereich des Spaltes zwischen Drehteller und Faltenbalg 1 befindet sich der Spurfugenabdeckbalg 5. Der Spurfugenabdeckbalg 5 verläuft unter Bildung eines tunnelartigen Hohlraumes 6 winklig zum Faltenbalg 1. Gehalten wird der Spurfugenabdeckbalg endseitig jeweils durch einen Rahmen 7, der an dem Rahmen 8 des entsprechenden Fahrzeugteiles befestigt ist.

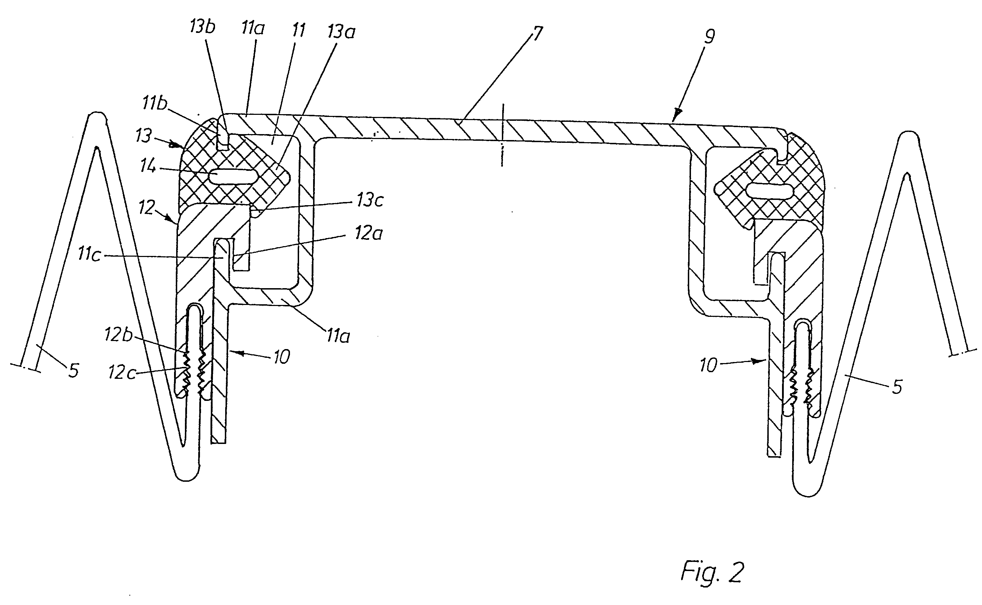

Im Bereich des Mittelrahmens 2 wird der Spurfugenabdeckbalg 5 durch einen weiteren Rahmen 9 gehalten, der mit dem Mittelrahmen verbunden ist. Die Rahmen 7 und 9 sind vom Grundsatz her gleich ausgebildet. Ein Unterschied besteht lediglich darin, daß der Rahmen 9 doppelt ausgebildet ist, so daß er zu beiden Seiten einen Spurfugenabdeckbalg 5 aufnehmen kann. Ein derartiger doppelter Rahmen ist in Fig. 2 dargestellt. Da der Rahmen 7 den Faltenbalg 5 nur an einer Seite aufnehmen muß, stellt der Rahmen 7 nur die eine Hälfte des Rahmens 9 dar.

Gemäß Fig. 2 ist der Rahmen zur Aufnahme des Balges 5 mit 9 bzw. 7 bezeichnet. Der Rahmen 7 bzw. 9, der etwa U-profilartig ausgebildet ist, weist im Bereich seiner Schenkel 10 das Aufnahmemaul 11 auf. Das U-förmig ausgebildete Aufnahmemaul 11 besitzt die Schenkel 11a, wobei an den Schenkeln endseitig aufeinander zuweisende Ansätze 11b, 11c angeordnet sind. Das Anschlußprofil 12 besitzt an seinem einen Ende eine Kralle 12a, mit der das Anschlußprofil 12 an den Ansatz 11c einhängbar ist.

Am anderen Ende ist das Anschlußprofil 12 mit dem Klammerteil 12b versehen, das Zähne 12c zur klemmbaren Aufnahme des Fugenabdeckbalges 5 aufweist. Zur Fixierung des Anschlußprofiles 12 in dem Aufnahmemaul 11 ist das mit 13 bezeichnete Klemmittel vorgesehen. Das Klemmittel 13 ist beispielsweise ein aus Gummi oder Kautschuk hergestelltes verformbares Profil in Form eines Kedergummis, das einen Kopf 13a besitzt, der pfeilspitzenförmig ausgebildet ist. Dieses Kedergummi 13 ist in das Aufnahmemaul einpreßbar, wenn das Anschlußprofil in dem Aufnahmemaul 11 einliegt. Das Anschlußprofil 12 ist dann in dem Aufnahmemaul 11 fixiert, wenn die Flanken 13b bzw. 13c des Kopfes 13a des Kedergummis 13 in der in Figur 2 dargestellen Weise an dem Anschlußprofil 12 bzw. an dem Ansatz 11b anliegen.

Um das Einpressen des Kopfes 13a des Profiles 13 zu erleichtern, ist das Profil im Bereich des Kopfes 13a mit einem Hohlraum 14 versehen, der das Zusammenquetschen beim Einführen des Kedergummis in das Aufnahmemaul erleichtert.

## Patentansprüche

1. Vorrichtung zur Abdeckung der Spurfuge zwischen dem Drehteller (4) des Drehgelenks und dem Falten- oder Wellenbalg (1) eines Gelenkfahrzeuges umfassend einen Rahmen (7, 9) zur Aufnahme des Spurfugenabdeckbalges (5),
**dadurch gekennzeichnet**, daß
der Rahmen (7, 9) ein Aufnahmemaul (11) zur klemmbaren Aufnahme des Endes des Spurfugenabdeckbalges (5) aufweist, wobei am Ende des Spurfugenabdeckbalges (5) ein Anschlußprofil (12) angeordnet ist, das von dem Aufnahmemaul (11) aufnehmbar ist, wobei das Anschlußprofil (12) ein Klammerteil (12b) zur Aufnahme des Endes des Spurfugenabdeckbalges aufweist.

2. Vorrichtung nach Anspruch 1,
**dadurch gekennzeichnet**, daß
Klemmmittel (13) zur klemmenden Fixierung (12) des Anschlußprofils (11) im Aufnahmemaul vorgesehen sind.

3. Vorrichtung nach Anspruch 2,
**dadurch gekennzeichnet**, daß
das Anschlußprofil (12) in das Aufnahmemaul (11) einhängbar ist.

4. Vorrichtung nach einem oder mehreren der vorstehenden Ansprüche,
**dadurch gekennzeichnet**, daß
das Klemmmittel (13) als verformbares Profil ausgebildet ist, das in des Aufnahmemaul (11) unter Fixierung des Anschlußprofiles (12) einpreßbar ist.

5. Vorrichtung nach Anspruch 4,
**dadurch gekennzeichnet**, daß
das verformbare Profil (13) einen Kopf (13a) aufweist, der in dar Aufnahmemaul (11) im das Anschlußprofil (12) fixierenden Zustand hineinragt.

6. Vorrichtung nach Anspruch 5,
**dadurch gekennzeichnet**, daß
der Kopf (13a) pfeilspitzenförmig ausgebildet ist.

7. Vorrichtung nach einem oder mehreren der Ansprüche 1 bis 6,
**dadurch gekennzeichnet**, daß
das verformbare Profil (13) als Kedergummi ausgebildet ist.

8. Vorrichtung nach einem oder mehreren der Ansprüche 1 bis 7,
**dadurch gekennzeichnet**, daß
das Aufnahmemaul (11) klauenartig ausgebildet ist.

9. Vorrichtung nach Anspruch 1,
**dadurch gekennzeichnet**, daß
das Klammerteil (12b) zur Fixierung des Balges (5) Zähne (12c) aufweist.

## Claims

1. Device for covering the track joint between the rotary plate (4) of the swivel joint and the expansion or concertina bellows (1) of an articulated vehicle comprising a frame (7, 9) to hold the track joint covering bellows (5),
**characterized in that**
the frame (7, 9) has a receiving mouth (11) for clamping reception of the end of the joint covering bellows (5), whereas the end of the track joint covering bellows (5) comprises a connecting profile (12), which is receivable by the receiving mouth (11), whereas the connecting profile (12) comprises a clamping part (12b) for receiving the end of the joint track covering bellows.

2. Device according to claim 1,
**characterized in that**
clamping means (13) being provided in the receiving mouth (11) for a clamping attachment of the connecting profile (12).

3. Device according to claim 2,
**characterized in that**
the connecting profile (12) is hungable into the receiving mouth (11).

4. Device according to one or more of the above-mentioned claims,
**characterized in that**
the clamping means (13) is designed as a deformable profile that is pressable into the receiving mouth (11) by fastening the connecting profile (12).

5. Device according to claim 4,
**characterized in that**
the deformable profile (13) has a head (13a) protruding into the receiving mouth (11) while fixing the connecting profile (12).

6. Device according to claim 5,
**characterized in that**
the head (13a) is shaped arrowhead like.

7. Device according to one or more of the claims 1 to 6,
**characterized in that**
the deformable profile (13) is designed as a border strengthening rubber.

8. Device according to one or more of the claims 1 to 7,
**characterized in that**
the receiving mouth (11) is designed claw like.

9. Fixture according to claim 1,
**characterized in that**
the clamping part (12b) is provided with teeth (12c) for fastening the bellows (5).

## Revendications

1. Dispositif pour recouvrir le joint de voie entre le plateau tournant (4) de l'articulation pivotante et le soufflet à plis ou le soufflet ondulé (1) d'un véhicule articulé comprenant un cadre (7, 9) pour recevoir un soufflet de recouvrement pour le joint de voie (5),
**caractérisé en ce que** le cadre (7, 9) est pourvu d'une bouche réceptrice (11) recevant par serrage l'extrémité du soufflet de recouvrement du joint de voie (5), un profil de raccordement (12) étant installé à l'extrémité du soufflet de recouvrement du joint de voie (5), ledit profil pouvant être reçu par la bouche réceptrice (11), le profil de raccordement (12) étant pourvu d'un dé (12b) qui reçoit l'extrémité du soufflet de recouvrement du joint de voie.

2. Dispositif selon la revendication 1,
**caractérisé en ce que** des moyens de serrage (13) sont avantageusement prévus pour fixer par serrage le profil de raccordement (12) dans la bouche réceptrice (11).

3. Dispositif selon la revendication 2,
**caractérisé en ce que** le profil de raccordement (12) peut être accroché dans la bouche réceptrice (11).

4. Dispositif selon une ou plusieurs des revendications précédentes,
**caractérisé en ce que** le moyen de serrage (13) est de préférence conçu comme profil déformable et peut être pressé dans la bouche réceptrice (11) en fixant le profil de raccordement (12).

5. Dispositif selon la revendication 4,
**caractérisé en ce que** le profil déformable (13) est pourvu d'une tête (13a) qui entre dans la bouche réceptrice (11) alors qu'elle fixe le profil de raccordement (12).

6. Dispositif selon la revendication 5,
**caractérisé en ce que** la tête (13a) a la forme d'une pointe de flèche.

7. Dispositif selon une ou plusieurs des revendications 1 à 6,
**caractérisé en ce que** le profil déformable (13) est conçu comme caoutchouc d'encadrement.

8. Dispositif selon une ou plusieurs des revendications 1 à 7,
**caractérisé en ce que** la bouche réceptrice (11) a la forme d'une griffe.

9. Dispositif selon la revendication 1,
**caractérisé en ce que** le dé (12b) est muni de dents (12c) destinées à fixer le soufflet (5).
